(19) Europäisches Patentamt
European Patent Office
Office européen des brevets

(11) **EP 4 614 600 A1**

(12) **EUROPEAN PATENT APPLICATION**

(43) Date of publication:
**10.09.2025 Bulletin 2025/37**

(21) Application number: **25158969.3**

(22) Date of filing: **19.02.2025**

(51) International Patent Classification (IPC):
*H01M 4/36* (2006.01)      *H01M 4/485* (2010.01)
*H01M 4/583* (2010.01)      *H01M 10/0525* (2010.01)
*H01M 4/587* (2010.01)      *H01M 4/02* (2006.01)

(52) Cooperative Patent Classification (CPC):
**H01M 4/485; H01M 4/364; H01M 4/366;**
**H01M 4/587; H01M 10/0525;** H01M 2004/021;
H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **20.02.2024 KR 20240024131**

(71) Applicant: **SK On Co., Ltd.**
**Seoul 03161 (KR)**

(72) Inventors:
• **PARK, Yang Kyu**
  **34124 Daejeon (KR)**
• **KIM, Seon Ah**
  **34124 Daejeon (KR)**
• **CHUNG, Ju Ho**
  **34124 Daejeon (KR)**
• **LEE, Jong Hyuk**
  **34124 Daejeon (KR)**

(74) Representative: **Stolmár & Partner**
**Patentanwälte PartG mbB**
**Blumenstraße 17**
**80331 München (DE)**

(54) **ANODE ACTIVE MATERIAL AND LITHIUM SECONDARY BATTERY**

(57)     An anode active material according to embodiments of the present disclosure includes silicon oxide particles. A ratio of the peak intensity in a region of 500 nm$^{-1}$ to 530 nm$^{-1}$ to the peak intensity in a region of 450 nm$^{-1}$ to 490 nm$^{-1}$, which are measured in a Raman spectrum of the silicon oxide particles is 3.0 to 4.5, and a crystallite size of a (111) plane of the silicon oxide particles is a crystallite size or more of a (220) plane, which are obtained through X-ray diffraction (XRD) analysis.

[FIG. 1]

EP 4 614 600 A1

**Description**

[BACKGROUND OF THE INVENTION]

1. Field of the Invention

The present disclosure relates to an anode active material and a lithium secondary battery including the same.

2. Description of the Related Art

A secondary battery is a battery which can be repeatedly charged and discharged. With rapid progress of information and communication, and display industries, the secondary battery has been widely applied to various portable electronic telecommunication devices such as a camcorder, a mobile phone, a laptop computer as a power source thereof. Recently, a battery pack including the secondary battery has also been developed and applied to an eco-friendly automobile such as an electric vehicle, a hybrid vehicle, etc., as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, and is advantageous in terms of a charging speed and light weight.

The lithium secondary battery includes, for example, a cathode and an anode, and may further include a separation membrane (separator) between the cathode and the anode. The anode may include a silicon-based material as anode active material particles for securing high energy density.

However, in the case of the silicon-based material, mechanical and chemical damages such as cracks of the particles may occur due to charging and discharging, and contact between the anode active material particles may be decreased. Therefore, it is necessary to develop an anode active material capable of securing lifespan stability and output/capacity characteristics.

[SUMMARY OF THE INVENTION]

An object of the present disclosure is to provide an anode active material for a lithium secondary battery having improved electrical characteristics and activity.

Another object of the present disclosure is to provide a lithium secondary battery having improved electrical characteristics and activity, which includes the anode active material.

To achieve the above objects, in one or more embodiments of the present disclosure, there is provided an anode active material including: silicon oxide particles having a crystallinity of 3.0 to 4.5 represented by Equation 1 below, and a crystallite size of a (111) plane of the silicon oxide particles is equal to or greater than a crystallite size of a (220) plane thereof, which are obtained through X-ray diffraction (XRD) analysis:

$$[\text{Equation 1}]$$

$$\text{Crystallinity} = I_C/I_A$$

In Equation 1, $I_C$ is a peak intensity in a wavelength region of 500 nm$^{-1}$ to 530 nm$^{-1}$ in a Raman spectrum of the silicon oxide particles, and $I_A$ is a peak intensity in a wavelength region of 450 nm$^{-1}$ to 490 nm$^{-1}$ in the Raman spectrum.

In some embodiments, the crystallite size of the silicon oxide particles may be 4.0 nm to 6.0 nm.

In some embodiments, $E_2$ defined by Equation 2 below may be 0.90 to 1.00:

$$[\text{Equation 2}]$$

$$E_2 = S_{220}/S_{111}$$

In Equation 2, $S_{220}$ is a crystallite size of the (220) plane of the silicon oxide particles obtained through the XRD analysis, and $S_{111}$ is a crystallite size of the (111) plane of the silicon oxide particles obtained through the XRD analysis.

In some embodiments, the $E_2$ may be 0.90 to 0.95.

In some embodiments, the anode active material may further include a carbon coating which covers at least a portion of a surface of the silicon oxide particles.

In some embodiments, $E_3$ defined by Equation 3 below may be 0.30 to 1.00:

[Equation 3]

$$E_3 = BET/C_W$$

In Equation 3, BET is a numerical value of a specific surface area ($m^2/g$) of the silicon oxide particles, and $C_W$ is a numerical value of a content (% by weight) of the carbon coating based on a total weight of the silicon oxide particles and the carbon coating.

In some embodiments, the $E_3$ may be 0.40 to 0.60.

In some embodiments, a content of the carbon coating may be 1% by weight to 10% by weight based on the total weight of the silicon oxide particles and the carbon coating.

In some embodiments, $E_4$ defined by Equation 4 below may be 20 to 30:

[Equation 4]

$$E_4 = |\delta|/1000$$

In Equation 4, $\delta$ is a slope (peak intensity/eV) of a silicon oxide (SiOx)-derived peak in an XPS spectrum of the silicon oxide particle surface measured through X-ray photoelectron spectroscopy (XPS).

In some embodiments, the silicon oxide-derived peak may be a maximum peak at a binding energy of $534 \pm 5$ eV in the XPS spectrum.

In some embodiments, the silicon oxide particles may have an average particle diameter of 3 $\mu$m to 9 $\mu$m.

In some embodiments, the anode active material may further include a carbon-based active material.

In some embodiments, the carbon-based active material may include artificial graphite, natural graphite, or a mixture thereof.

In some embodiments, a content of the silicon oxide particles may be greater than 0% by weight and equal to or less than 10% by weight based on a total weight of the anode active material.

According to another aspect of the present disclosure, there is provided a lithium secondary battery including: an anode which includes the anode active material according to the above-described embodiments; and a cathode disposed to face the anode.

The anode active material may include silicon oxide particles. An energy density of the anode active material may be increased, and capacity and output characteristics of the lithium secondary battery may be improved by the silicon oxide particles. Crystallinity and crystallite size of the silicon oxide particles may be adjusted within a predetermined range. Accordingly, the volume change and defect occurrence of the silicon oxide particles may be suppressed, the adhesion of the anode may be improved, and the resistance and electrode expansion rate may be reduced.

The silicon oxide particles may have a carbon coating formed on the surface thereof. The structural stability of the silicon oxide particles may be improved by the carbon coating, and the anode activity may be maintained for a long period of time, such that output characteristics of the lithium secondary battery may be improved.

The lithium secondary battery according to the embodiments of the present disclosure may be widely applied to green technology fields such as an electric vehicle, and a battery charging station, as well as other solar power generation and wind power generation using the batteries. In addition, the lithium secondary battery according to the embodiments of the present disclosure may be used in an eco-friendly electric vehicle, and a hybrid vehicle, etc., which are intended to prevent climate change by suppressing air pollution and greenhouse gas emissions.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic plan view of a lithium secondary battery according to exemplary embodiments; and
FIG. 2 is the schematic cross-sectional view of a lithium secondary battery according to exemplary embodiments.

[DETAILED DESCRIPTION OF THE INVENTION]

According to embodiments of the present disclosure, an anode active material including a silicon oxide is provided.

According to embodiments of the present disclosure, an anode including the anode active material and a lithium secondary battery including the same are provided.

The terms "upper surface," "lower surface," etc. as used herein are intended to describe the relative positional relationship of the respective components and do not mean an absolute upper-lower relationship.

Hereinafter, embodiments of the present disclosure will be described in detail. However, these embodiments are merely an example, and the present disclosure is not limited to the specific embodiments described as the example.

The anode active material according to embodiments of the present disclosure may include silicon oxide particles. The silicon oxide particles may include a silicon oxide ($SiO_x$, $0<x<2$).

In one embodiment, the silicon oxide particles may include metal-doped $SiO_x$. For example, the silicon oxide ($SiO_x$, $0<x<2$) may include a lithium compound or a magnesium compound. The $SiO_x$ may be pretreated with lithium or magnesium, and may include, for example, lithium silicate or magnesium silicate.

In one embodiment, the silicon oxide particles may further include silicon (Si), a silicon-carbon composite, or a silicon-metal alloy. These may be used alone or in combination of two or more thereof.

The silicon oxide has a high energy density, such that an energy density of the anode active material may be increased by the silicon oxide. Accordingly, charge/discharge capacities and initial efficiency of the lithium secondary battery may be improved.

The silicon oxide particles may include an amorphous structure and a crystalline structure.

The crystalline structure may refer to silicon (Si) having crystallinity among silicons included in the silicon oxide particles. The amorphous structure may refer to silicon having non-crystallinity among silicons included in the silicon oxide particles, or silicon having a crystal size so small that it is difficult to measure the size through X-ray diffraction (XRD) analysis.

According to exemplary embodiments, the crystallinity of the silicon oxide particles represented by Equation 1 below may be 3.0 to 4.5.

[Equation 1]

$$\text{Crystallinity} = I_C/I_A$$

In Equation 1, $I_C$ is a maximum peak intensity in a wavelength region of 500 $nm^{-1}$ to 530 $nm^{-1}$ in a Raman spectroscopy spectrum of the silicon oxide particles obtained through Raman spectroscopy. $I_A$ is a maximum peak intensity in a wavelength region of 450 $nm^{-1}$ to 490 $nm^{-1}$ in the Raman spectroscopy spectrum.

$I_C$ may be a peak intensity corresponding to the crystalline structure (e.g., crystalline Si) of the silicon oxide particles. $I_A$ may be an intensity of a peak corresponding to the amorphous region (e.g., a region having the amorphous Si structure). For example, $I_C$ may represent a ratio of silicon having the crystalline structure among the silicon oxide particles, and $I_A$ may represent a ratio of silicon having the amorphous structure among the silicon oxide particles.

For example, a ratio of the crystalline structure and the amorphous structure included in the silicon oxide particles may be calculated from the crystallinity of the silicon oxide particles.

Since the silicon oxide particles have the above-described crystallinity, volume expansion due to charging and discharging may be suppressed, and output characteristics and lifespan characteristics of the lithium secondary battery may be further improved.

For example, if the crystallinity is greater than 4.5, the crystalline structure in the silicon oxide particles may be excessively increased, thereby causing an increase in the volume change of the anode active material, and adhesion may be decreased or contact loss between an anode active material and a conductive material may be increased. For example, if the crystallinity is less than 3.0, the crystallinity of the silicon oxide particles may be decreased, thereby causing a decrease in the structural stability of the anode active material, and a decrease in the energy density and output characteristics of the anode.

In some embodiments, the crystallinity of the silicon oxide particles may be 3.3 to 4.5, 3.5 to 4.5, or 4.0 to 4.5. Within the above range, surface defects of the silicon oxide particles may be improved, and a stable SEI film may be formed on the surface of the particles. Accordingly, volume expansion, crack occurrence, and contact loss of the anode active material may be further suppressed, and lifespan characteristics, initial efficiency, and capacity characteristics of the lithium secondary battery may be further improved.

A crystallite size of a (111) plane of the silicon oxide particles may be equal to or greater than a crystallite size of a (220) plane thereof. The crystallite size of the silicon oxide particles may be measured through the XRD analysis.

For example, the crystallite size may be calculated through the Scherrer equation of Equation 5 below.

[Equation 5]

$$L = \frac{0.9\lambda}{\beta cos\theta}$$

In Equation 5 above, L denotes the crystallite size (nm), $\lambda$ denotes an X-ray wavelength (nm), $\theta$ denotes a diffraction angle (rad) corresponding to the (111) plane or the (220) plane, and $\beta$ denotes a full width at half maximum (rad) of a peak appearing at the diffraction angle ($\theta$).

In some embodiments, $\beta$ in Equation 5 above may use a full width at half maximum corrected for a value derived from equipment. In one embodiment, Si may be used as a standard material for reflecting the equipment-derived value. In this case, by fitting full width at half maximum profiles in a full range of $2\theta$ of Si, the equipment-derived full width at half maximum may be represented as a function of $2\theta$. Thereafter, a value corrected by subtracting the equipment-derived full width at half maximum value in the corresponding $2\theta$ obtained from the above function may be used as $\beta$.

As the crystallite size of the (111) plane in the silicon oxide particles is the crystallite size or more of the (220) plane, the structural stability of the silicon oxide particles may be improved, as well as migration characteristics of lithium ions may be enhanced. In addition, a resistance of the anode active material may be reduced, and the initial efficiency and output characteristics of the lithium secondary battery may be improved.

In some embodiments, $E_2$ defined by Equation 2 below may be 0.90 to 1.00.

$$[\text{Equation 2}]$$

$$E_2 = S_{220}/S_{111}$$

In Equation 2, $S_{220}$ is a crystallite size of the (220) plane of the silicon oxide particles obtained through the XRD analysis, and $S_{111}$ is a crystallite size of the (111) plane of the silicon oxide particles obtained through the XRD analysis.

As the $E_2$ is 0.90 or more, a change width in the volume according to the crystal plane of the silicon oxide particles may be decreased, and an alloying speed of the silicon oxide particles may be increased in the charging and discharging processes. Therefore, the output characteristics and initial efficiency of the lithium secondary battery may be improved, and the lifespan characteristics may be further improved.

In one embodiment, the $E_2$ may be 0.90 to 0.98, or 0.90 to 0.95. Within the above range, the lifespan characteristics, output characteristics, and initial efficiency of the lithium secondary battery may be further improved.

In some embodiments, the silicon oxide particles may have an Si crystallite size of 4.0 nm to 6.0 nm. For example, a crystallite size of the (111) plane and a crystallite size of the (220) plane of the silicon oxide particles may be 4.0 nm to 6.0 nm. The crystallite size may be calculated by the Scherrer equation of Equation 5 above.

Within the above range, the mechanical properties of the silicon oxide particles may be improved, such that cracks occurred due to a press process or charging and discharging may be suppressed, and a migration distance of lithium ions in the silicon oxide particles may be reduced, such that the initial output characteristics may be further improved.

In one embodiment, the silicon oxide particles may have a crystallite size of 4.5 nm to 6.0 nm, or 4.8 nm to 5.5 nm. Within the above range, the internal resistance of the anode may be further reduced, and the output characteristics and lifespan characteristics of the lithium secondary battery may be further improved.

The anode active material may further include a carbon coating which covers at least a portion of a surface of the silicon oxide particles.

The carbon coating may block direct contact between the silicon oxide particles and an electrolyte, thereby suppressing side reactions and crack occurrence caused by the electrolyte, and buffering chemical and mechanical actions on the silicon oxide. In addition, conductivity of the anode active material may be increased by the carbon coating. The lifespan characteristics and output characteristics of the lithium secondary battery may be further improved by the carbon coating.

In one embodiment, the carbon coating may be formed on the silicon oxide particles by chemical vapor deposition (CVD), physical vapor deposition (PVD), or thermal deposition of a hydrocarbon gas. For example, the carbon coating may be formed by depositing hydrocarbon such as methane, ethylene or acetylene, etc., or a coal-based material such as pitch or coal tar, etc. on the silicon oxide particles.

In some embodiments, the carbon coating may include amorphous carbon or crystalline carbon.

For example, the carbon coating may include amorphous carbon such as hard carbon, soft carbon, calcined cokes, mesophase pitch carbide, etc., and/or crystalline carbon such as natural graphite, artificial graphite, etc. These may be used alone or in combination of two or more thereof.

In one embodiment, the carbon coating may include amorphous carbon, and may include, for example, hard carbon and/or soft carbon. The amorphous carbon is structurally stable and may participate in a reaction even in a low state-of-charge (SOC) region, thereby suppressing cracks occurred due to charging and discharging or external impact.

In some embodiments, $E_3$ defined by Equation 3 below may be 0.30 to 1.00.

[Equation 3]

$$E_3 = BET/C_W$$

In Equation 3, BET is a numerical value of a specific surface area ($m^2/g$) of the silicon oxide particles, and $C_W$ is a numerical value of a content (% by weight ("wt%")) of the carbon coating based on a total weight of the silicon oxide particles and the carbon coating.

In Equation 3, BET and $C_W$ are each dimensionless values. For example, BET may be a value obtained by removing a unit from the specific surface area of the silicon oxide particles measured in units of $m^2/g$. For example, $C_W$ may be a value obtained by removing the unit from the content of the carbon coating measured in units of wt%.

Within the above range, the reaction area of the silicon oxide particles is secured, such that intercalation and deintercalation of lithium ions through the silicon oxide particles may be smoothly performed. In addition, volume expansion and cracks occurred due to charging and discharging may be suppressed while inhibiting an increase in the resistance of the anode active material.

In some embodiments, the content of the carbon coating may be measured using thermogravimetric analysis (TGA). For example, the content of the carbon coating may be calculated by measuring the weight change of the silicon oxide particles on which the carbon coating is formed by heat treatment and injection of nitrogen ($N_2$) gas.

In one embodiment, the $E_3$ may be 0.40 to 0.60. Within the above range, the lifespan characteristics and output characteristics of the lithium secondary battery may be further improved.

In some embodiments, the content of the carbon coating may be 1 wt% to 10 wt%, or 1 wt% to 5 wt% based on a total weight of the silicon oxide particles and the carbon coating. Within the above range, an increase in the internal resistance of the anode active material may be suppressed, as well as a volume change of the silicon oxide particles may be alleviated by the carbon coating, and the energy density of the anode active material may be further improved.

In some embodiments, $E_4$ defined by Equation 4 below may be 20 to 30.

[Equation 4]

$$E_4 = |\delta|/1000$$

In Equation 4, $\delta$ is a slope value (dimensionless number) of a silicon oxide (SiOx)-derived peak in an XPS spectrum of the silicon oxide particle surface measured through X-ray photoelectron spectroscopy (XPS).

For example, the slope of the peak may refer to a slope (peak intensity/eV) at a point where the intensity of the silicon oxide ($SiO_x$)-derived peak begins to decrease (e.g., an inflection point of the peak) in an O1s spectrum of the silicon oxide particle surface measured through XPS.

In some embodiments, a position of the $SiO_x$-derived peak may be measured by performing deconvolution on the O1s peak measured through XPS. For example, the $SiO_x$-derived peak may be a maximum peak at a binding energy of 534 $\pm$5 eV in the XPS spectrum.

For example, the slope at the inflection point of the $SiO_x$-derived peak may be calculated from an XPS spectrum graph using OriginPro (OriginLab Corporation) and Excel (Microsoft Corporation).

As the slope of the $SiO_x$ peak is increased, oxygen defects on the surface of the silicon oxide particles may be increased. For example, a degree of oxygen defects on the surface of the silicon oxide particles may be measured by the $E_4$. When the $E_4$ is 20 to 30, the internal resistance and expansion rate of the anode may be decreased, and the lifespan characteristics, initial efficiency, and output characteristics of the lithium secondary battery may be further improved. In addition, the surface defects of the silicon oxide particles may be improved, such that a stable SEI film may be formed, and the lifespan characteristics and high-temperature storage characteristics of the anode active material may be improved.

In one embodiment, the E4 may be 20 to 28, or 21 to 25. Within the above range, the volume change of the anode active material may be further reduced, and the lifespan characteristics and output characteristics of the lithium secondary battery may be further improved.

In some embodiments, the silicon oxide particles may have an average particle diameter ($D_{50}$) of 3 $\mu$m to 9 $\mu$m. The $D_{50}$ is a particle diameter at a volume fraction of 50% in a volume particle size distribution of the silicon oxide particles. Within the above range, the anode active material may suppress volume expansion while having high energy density, and the adhesion between the anode active material layer and the anode current collector may be improved.

The volume particle size distribution may be measured using a particle size analyzer through a light scattering method, a laser diffraction method, etc.

In one embodiment, the $D_{50}$ of the silicon oxide particles may be 5 $\mu$m to 8 $\mu$m, or 6 $\mu$m to 7 $\mu$m.

In some embodiments, $D_{10}$ of the silicon oxide particles may be 5 $\mu$m or less, for example, 3 $\mu$m to 5 $\mu$m. The $D_{10}$ is a particle diameter at a volume fraction of 10% in the volume particle size distribution of the silicon oxide particles.

In some embodiments, the $D_{90}$ of the silicon oxide particles may be 10 $\mu$m or less, for example, 9 $\mu$m to 10 $\mu$m. The $D_{90}$ is a particle diameter at a volume fraction of 90% in the volume particle size distribution of the silicon oxide particles.

In some embodiments, a SPAN of the silicon oxide particles represented by Equation 6 below may be 0.7 to 1.0, 0.7 to 0.9, or 0.75 to 0.8.

[Equation 6]

$$SPAN = (D_{90}-D_{10})/D_{50}$$

If the SPAN value is 1.0 or less, the particle size distribution may be decreased, and an increase in the volume and thickness of the anode may be suppressed. If the SPAN value is 0.7 or more, a packing density of the silicon oxide particles may be increased, and contact between the anode active material particles may be further improved.

In some embodiments, the silicon oxide particles may have a specific surface area of 1 $m^2$/g to 8 $m^2$/g, 1.5 $m^2$/g to 7.5 $m^2$/g, 1.8 $m^2$/g to 6.0 $m^2$/g, or 1.9 $m^2$/g to 5.5 $m^2$/g. For example, the specific surface area may be measured by the Brunauer-Emmett-Teller (BET) measurement method by nitrogen gas adsorption using a specific surface area measuring device.

Within the above range, a reaction area of the silicon oxide particles may be appropriately adjusted such that intercalation and deintercalation of lithium ions may be smoothly performed while suppressing a side reaction to the electrolyte. Accordingly, the charge/discharge capacities and fast charging performance may be enhanced, while improving the lifespan characteristics of the lithium secondary battery.

In some embodiments, the anode active material may further include a carbon-based active material. For example, the anode active material may include a mixture of the silicon oxide particles and the carbon-based active material.

In some embodiments, the carbon-based active material may include amorphous carbon such as calcined cokes, mesophase pitch carbide, hard carbon, soft carbon, etc., and/or crystalline carbon such as natural graphite, artificial graphite, etc. These may be used alone or in combination of two or more thereof.

In one embodiment, the carbon-based active material may include artificial graphite, natural graphite, or a mixture thereof. Accordingly, high-temperature storage characteristics and high-temperature lifespan characteristics of the lithium secondary battery may be improved together without decreasing the energy density and capacity thereof.

In some embodiments, a content of the silicon oxide particles may be greater than 0 wt% and equal to or less than 10 wt% based on a total weight of the anode active material. Within the above range, expansion of the anode active material and short circuit within the electrode may be suppressed, and lifespan and capacity recovery rate may be improved.

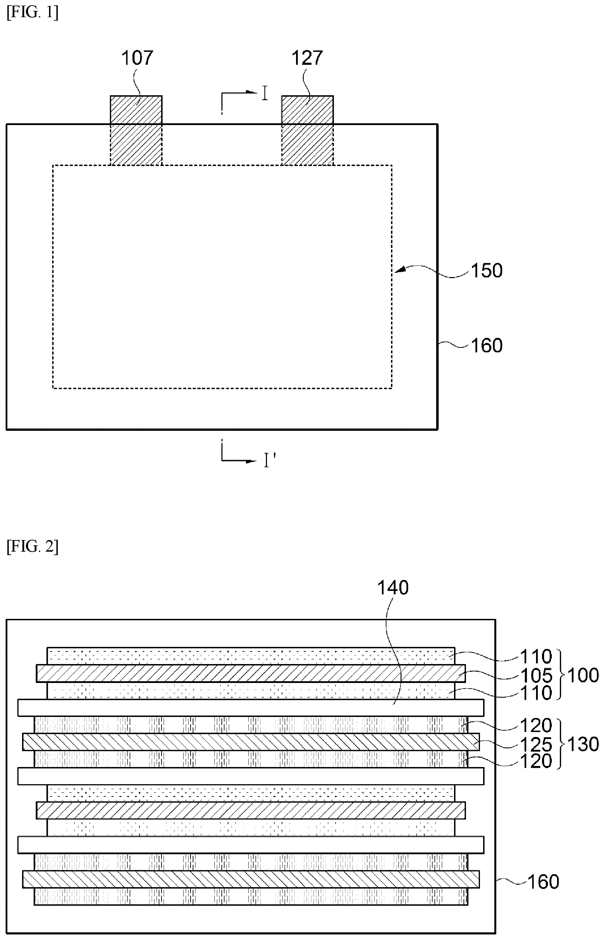

FIGS. 1 and 2 are a schematic plan view and a cross-sectional view of a lithium secondary battery according to exemplary embodiments, respectively. FIG. 2 is a cross-sectional view taken on line I-I' shown in FIG. 1 in a thickness direction of the battery.

Referring to FIGS. 1 and 2, the lithium secondary battery may include a cathode 100 and an anode 130 disposed to face the cathode 100.

The cathode 100 may include a cathode current collector 105 and a cathode active material layer 110 formed on at least one surface of the cathode current collector 105.

According to exemplary embodiments, the cathode active material layer 110 may be formed on both surfaces (e.g., upper and lower surfaces) of the cathode current collector 105. For example, the cathode active material layer 110 may be formed on the upper and lower surfaces of the cathode current collector 105, respectively.

The cathode current collector 105 may include stainless steel, nickel, aluminum, titanium or an alloy thereof. The cathode current collector 105 may also include aluminum or stainless steel subjected to surface treatment with carbon, nickel, titanium or silver.

The cathode active material layer 110 may include a cathode active material, a binder, and/or a conductive material. For example, a cathode slurry may be prepared by mixing the cathode active material with a binder and/or a conductive material in a solvent, followed by stirring the same. The cathode current collector 105 may be coated with the cathode slurry, followed by compressing and drying to form the cathode active material layer 110.

The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

The cathode active material may include a lithium-transition metal oxide represented by Formula 1 below.

[Formula 1]    $Li_aNi_bM_{1-b}O_2$

In Formula 1, a and b may satisfy $0.95 \leq a \leq 1.05$, $b \geq 0.5$, and M may be at least one element of Na, Mg, Ca, Y, Ti, Sr, Hf, V, Nb, Ta, Cr, Mo, W, Mn, Co, Fe, Cu, Ag, Zn, B, Al, Ga, C, Si, Sn, Ba and Zr.

In one embodiment, the lithium-transition metal oxide includes nickel (Ni), and may further include at least one of cobalt (Co) and manganese (Mn). For example, the lithium-transition metal oxide may include nickel-cobalt-manganese (NCM)-based lithium oxide.

Nickel (Ni) may be provided as a metal associated with the capacity of the lithium secondary battery. The higher the content of nickel, the better the capacity and output of the lithium secondary battery, but if the content of nickel is excessively increased, it may be disadvantageous in terms of mechanical and electrical stabilities.

The conductivity or resistance of the lithium secondary battery may be improved by cobalt (Co), as well as the mechanical and electrical stabilities of the lithium secondary battery may be improved by manganese (Mn).

The chemical structure represented by Formula 1 shows a bonding relationship between elements included in the lattice structure or crystal structure of the cathode active material, and does not exclude other additional elements. For example, M may be provided as a main active element of the cathode active material. Here, it should be understood that Formula 1 is provided to express the bonding relationship between the main active elements, and is a formula encompassing introduction and substitution of the additional elements.

In one embodiment, the cathode active material may further include auxiliary elements which are added to the main active elements, thus to enhance chemical stability thereof or the crystal structure. The auxiliary element may be incorporated into the crystal structure together to form a bond, and it should be understood that this case is also included within the chemical structure represented by Formula 1.

The binder may include vinylidene fluoride-hexafluoropropylene copolymer (PVDF-co-HFP), polyvinylidene fluoride (PVDF), polyacrylonitrile, polymethylmethacrylate, etc.

The conductive material may include a carbon-based conductive material such as graphite, carbon black, graphene, or carbon nanotubes and/or a metal-based conductive material such as tin, tin oxide, titanium oxide, or a perovskite material such as $LaSrCoO_3$, and $LaSrMnO_3$, etc.

In some embodiments, the cathode 100 may have an electrode density of 3.0 to 3.9 g/cc, and preferably 3.2 to 3.8 g/cc.

The anode 130 may include an anode current collector 125 and an anode active material layer 120 formed on at least one surface of the anode current collector 125. The anode active material layer 120 may be coated on upper and lower surfaces of the anode current collector 125, respectively.

In some embodiments, an anode slurry may be prepared by mixing the anode active material according to the above-described embodiments with a binder, a conductive material and/or a dispersant in a solvent, followed by stirring the same. The anode current collector 125 may be coated with the anode slurry, followed by drying and pressing to form the anode 130.

The anode current collector 125 may include, for example, gold, stainless steel, nickel, aluminum, titanium, copper, or an alloy thereof, and may include, for example, copper or a copper alloy.

As the binder and the conductive material, materials which are substantially the same as or similar to the above-described materials may be used. In some embodiments, a binder for forming an anode may include, for example, an aqueous binder such as styrene-butadiene rubber (SBR) for consistency with the carbon-based active material, and may be used together with a thickener such as carboxymethyl cellulose (CMC).

In exemplary embodiments, the anode 130 may have an electrode density of 1.0 g/cc to 1.9 g/cc.

In some embodiments, a separation membrane 140 may be interposed between the cathode 100 and the anode 130.

The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane may include a nonwoven fabric made of glass fiber having a high melting point, polyethylene terephthalate fiber or the like.

According to exemplary embodiments, an electrode cell is defined by the cathode 100, the anode 130, and the separation membrane 140, and a plurality of the electrode cells may be repeatedly disposed or stacked to form an electrode assembly 150. For example, the electrode assembly 150 may be of a winding type, a stacking type, a z-folding type, or a stack-folding type electrode assembly.

The electrode assembly 150 may be housed within a case, thereby defining the lithium secondary battery.

In one embodiment, an electrolyte may be housed within the case 160 together with the electrode assembly 150.

According to exemplary embodiments, a non-aqueous electrolyte may be used as the electrolyte.

The non-aqueous electrolyte includes a lithium salt of an electrolyte and an organic solvent, the lithium salt is represented by, for example, $Li^+X^-$, and as an anion ($X^-$) of the lithium salt, $F^-$, $Cl^-$, $Br^-$, 1, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FS0_2)_2N^-$, $CF_3CF_2$

$(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulforane, $\gamma$-butyrolactone, propylene sulfite, tetrahydrofurane, and the like may be used. These compounds may be used alone or in combination of two or more thereof.

As shown in FIG. 1, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the outer case 160.

FIG. 1 illustrates that the cathode lead 107 and the anode lead 127 are formed on the same side of the lithium secondary battery or the case 160, but these electrode leads may be formed on sides opposite to each other. For example, the cathode lead 107 may be formed on one end portion of the case 160, and the anode lead 127 may be formed on the other end portion of the case 160.

The lithium secondary battery may be manufactured, for example, in a cylindrical shape using a can, a square shape, a pouch type or a coin shape.

Hereinafter, experimental examples including specific examples and comparative examples are proposed to facilitate understanding of the present disclosure. However, the following examples are only given for illustrating the present disclosure and those skilled in the art will obviously understand that various alterations and modifications are possible within the scope and spirit of the present disclosure. Such alterations and modifications are duly included in the appended claims.

## Examples and Comparative Examples

### 1. Preparation of silicon-based active material

Methane gas was carbonized by performing chemical vapor deposition (CVD) treatment at a temperature of 950°C on silicon oxide particles ($SiO_x$). Calcination was performed at a predetermined temperature to form a carbon coating on the silicon oxide particles. The calcination temperature was changed when forming the carbon coating as shown in Table 1 below to prepare silicon-based active materials A-1 to A-13, respectively. Through pulverization and classification processes, the $D_{10}$, $D_{50}$ and $D_{90}$ of the silicon-based active material were adjusted in a range of 3.5 $\mu$m to 4.7 $\mu$m, 6.0 $\mu$m to 7.0 $\mu$m, and 9.0 $\mu$m to 10.0 $\mu$m, respectively, and the SPAN value was adjusted in a range of 0.7 to 1.0.

The volume particle size distribution of the silicon-based active material was measured by laser diffraction. Specifically, the silicon-based active material was put into ethanol so as to satisfy the refractive index in a range of 5% to 10%, followed by performing ultrasonic dispersion treatment. A volume particle size distribution curve was measured by measuring a difference in diffraction patterns according to particle size using a laser diffraction particle size measuring device (Matersizer 3000, Malvern).

Properties of the silicon-based active materials A-1 to A-13 were analyzed, respectively.

### 2. Measurement of crystallite size

For the silicon-based active material, scans were performed by specifying a $2\theta$ value from 5° to 80° under conditions of 45 kV and 40 mA using a Cu X-ray source. Through the XRD analysis, peak values at diffraction angles corresponding to the (111) plane and (220) plane were obtained, respectively. The obtained peak values were subjected to deconvolution for crystal peaks and amorphous peaks, and the crystallite sizes on the 111 and 220 crystal planes were calculated using Equation 5, respectively.

### 3. Measurement of crystallinity ($I_C/I_A$)

For the silicon-based active material, Raman spectroscopy was performed to obtain a Raman spectrum. The Raman spectroscopy was performed using LabRam HR evolution from Horiba in a range of 67 $cm^{-1}$ to 1,800 $cm^{-1}$ under conditions of a laser wavelength of 532 nm, a lens magnification of 50 times and a static mode.

In the Raman spectrum, $I_C$ was measured as the peak intensity at 520±10 $cm^{-1}$, and $I_A$ was measured as the peak intensity at 470±10 $cm^{-1}$. The measurement values were shifted to a center (1000 $cm^{-1}$), followed by performing deconvolution to calculate $I_C/I_A$.

### 4. Measurement of content (Cw) of carbon coating

The silicon-based active material was put into a holder and the weight was measured. Nitrogen ($N_2$) gas was injected into the holder, and the weight change was measured while performing heat treatment from 25°C to 900°C. A minimum weight of the silicon-based active material was measured in the heat treatment process, and a decrease in the minimum weight compared to the weight of the silicon-based active material at 25°C was calculated to measure the content (reduction amount) of the carbon coating.

### 5. Measurement of specific surface area (BET)

For the silicon-based active material, the specific surface area was measured by the BET method on the basis of nitrogen gas adsorption using a specific surface area measuring device (BELSORP-mini II).

### 6. Measurement of slope ($\delta$) of SiO$_x$ peak

For the silicon-based active material, the O1s peak on the surface of the anode active material was measured through XPS analysis using ESCALAB 250Xi from Thermo Scientific. The measured O1s peak was subjected to deconvolution to confirm the SiO$_x$ peak position (534$\pm$5 eV), and calculate a slope ($\delta$) of the SiO$_x$ peak. The slope of the peak was derived using OriginPro 8G (OriginLab).

The XPS was performed using the Al K-alpha beam, and the voltage and the beam size were set to 1486.68 eV and 650 $\mu$m, respectively. The analysis of the measured XPS results was performed in a constant analyzer energy (CAE) mode.

E2, E3 and E4 of the silicon-based active material were calculated using Equations 2 to 4 from the properties of the silicon-based active material measured by the above-described methods.

Measurement results are shown in Table 1 below.

[TABLE 1]

| Division | Calcination temperature (°C) | Crystallinity | Crystallite size (nm) | | Cw (wt%) | BET (m²/g) | $E_2$ | $E_3$ | $E_4$ |
|---|---|---|---|---|---|---|---|---|---|
| | | | (111) plane | (220) plan | | | | | |
| A-1 | 850 | 4.43 | 5.5 | 5.0 | 3.9 | 2.00 | 0.91 | 0.51 | 21.56 |
| A-2 | 950 | 3.74 | 4.8 | 4.5 | 5.1 | 1.70 | 0.94 | 0.33 | 28.27 |
| A-3 | 900 | 3.46 | 4.9 | 4.6 | 5.5 | 7.30 | 0.97 | 1.02 | 28.41 |
| A-4 | 800 | 3.48 | 5.9 | 5.7 | 5.6 | 5.70 | 0.94 | 1.33 | 33.64 |
| A-5 | 1000 | 3.03 | 4.6 | 4.4 | 4.7 | 5.50 | 0.96 | 1.17 | 28.40 |
| A-6 | 925 | 3.02 | 4.7 | 3.6 | 3.1 | 4.30 | 0.77 | 1.39 | 34.76 |
| A-7 | 910 | 4.43 | 5.5 | 5.0 | 6.0 | 1.50 | 0.91 | 0.25 | 21.56 |
| A-8 | 880 | 4.43 | 5.5 | 5.0 | 3.9 | 2.00 | 0.91 | 0.51 | 18.75 |
| A-9 | 700 | 1.68 | 5.5 | 6.0 | 3.0 | 9.80 | 1.09 | 3.27 | 40.05 |
| A-10 | 650 | 9.81 | 8.6 | 9.8 | 2.4 | 6.20 | 1.14 | 2.58 | 51.81 |
| A-11 | 750 | 4.43 | 5.0 | 5.5 | 3.9 | 2.00 | 1.10 | 0.51 | 21.56 |
| A-12 | 730 | 2.91 | 5.5 | 5.0 | 3.9 | 2.00 | 0.91 | 0.51 | 21.56 |
| A-13 | 870 | 4.73 | 5.5 | 5.0 | 3.9 | 2.00 | 0.91 | 0.51 | 21.56 |

### 7. Manufacturing of lithium secondary battery

An anode active material was prepared by mixing the silicon-based active material and artificial graphite in a weight ratio of 5:95. The types of silicon-based active materials used in each example and comparative example are shown in Table 2 below.

In Example 9, the silicon-based active material and artificial graphite were mixed in a weight ratio of 2:98. In Example 10, the silicon-based active material and artificial graphite were mixed in a weight ratio of 15:85.

An anode slurry was prepared by mixing the anode active material, carbon nanotubes (CNTs) as a conductive material, and styrene-butadiene rubber (SBR) as a binder in a weight ratio of 80:10:10. The anode slurry was applied to a Cu foil, followed by drying and pressing the same to prepare an anode having a loading amount of 3 mg/cm$^2$ (based on cross-section) and a slurry density of 1.42 g/cc.

A coin cell type secondary battery was manufactured using a Li foil as a counter electrode, and an electrolyte including 1 wt% of FEC and 1.0M LiPF$_6$ mixed solvent (EC:EMC = 3:7, volume ratio). The secondary battery was left at room temperature (25°C) for 12 hours, and then the battery performance was evaluated.

**Experimental example**

**(1) Evaluation of electrode adhesion**

A peel-off test was performed on each anode according to the examples and comparative examples using a 90 degree adhesion universal testing machine (UTM) to evaluate the adhesion between the anode active material layer and the anode current collector.

**(2) Evaluation of electrode resistance**

The electrode resistance of each anode according to the examples and comparative examples was measured using Hioki XF057 Probe unit measuring equipment under measurement conditions of a current of 100 μA, a voltage range of 0.5 V, and the number of pin contacts of 500.

**(3) Evaluation of electrode expansion rate**

A preliminary cycle was performed on each of the lithium secondary batteries of the examples and comparative examples under conditions of 0.005 V to 1.5 V, 0.1 C, and 0.01 C cut-off, and additional charging was performed thereon under conditions of 0.005 V, 0.1 C, and 0.01 C cut-off. A thickness of the anode active material layer was measured, and the electrode expansion rate was calculated as an increase rate to the initial thickness of the anode active material layer.

**(4) Evaluation of initial efficiency**

The above-described secondary batteries according to the examples and comparative examples were subjected to charging (CC/CV, 0.1 C, lower limit voltage 0.005 V, cut-off current 0.01 C) and discharging (CC, 0.1 C, upper limit voltage 1.5 V cut-off) at 25°C, then the charge capacities and discharge capacities were measured. The initial efficiency was calculated as the ratio (%) of the discharge capacity to the charge capacity.

**(5) Evaluation of lifespan characteristics**

A first cycle was performed on each of the secondary batteries according to the examples and comparative examples in a way that executing charging (CC/CV, 0.1 C, lower limit voltage 0.005 V, cut-off current 0.01 C) and discharging (CC, 0.1 C, upper limit voltage 1.5 V cut-off) at 35°C was set to one cycle. Thereafter, the charging and discharging were repeatedly performed thereon 1000 times based on the current density of 1 C, then the discharge capacity was measured. The lifespan characteristic was evaluated as a percentage of the discharge capacity at 1000 times divided by the discharge capacity at one time.

**(6) Evaluation of high-temperature lifespan characteristics**

A first cycle was performed on each of the secondary batteries according to the examples and comparative examples in a way that executing charging (CC/CV, 0.1 C, lower limit voltage 0.005 V, cut-off current 0.01 C) and discharging (CC, 0.1 C, upper limit voltage 1.5 V cut-off) at 45°C was set to one cycle. Thereafter, the charging and discharging were repeatedly performed thereon 600 times at an interval of 10 minutes, then the discharge capacity was measured. The high-temperature lifespan characteristic was evaluated as a percentage of the discharge capacity at 600 times divided by the discharge capacity at one time.

**(7) Evaluation of high-temperature storage characteristics**

The above-described secondary batteries according to the examples and comparative examples were subjected to charging (CC/CV, 0.5 C, upper limit voltage 4.2 V, cut-off current 0.05 C) and discharging (CC, 0.5 C, lower limit voltage 2.5 V cut-off) at 25°C one time, and then charged to SOC 100% and stored at 60°C for 12 weeks. After 12 weeks, the discharge capacity was measured, and the high-temperature storage characteristic was evaluated as a percentage of the discharge capacity at 12 weeks divided by the initial discharge capacity.

**(8) Evaluation of HPPC output characteristics**

The HPPC room temperature output characteristics of the secondary batteries of the examples and comparative examples were measured through the HPPC (Hybrid Pulse Power Characterization by FreedomCar Battery Test Manual) measurement method.

Evaluation results are shown in Table 2 below.

[TABLE 2]

| Division (Type) | Electrode adhesion (N) | Electrode resistance (mΩ·cm) | Electrode expansion rate (%) | Initial efficiency (%) | Lifespan characteristics (%) | High-temperature lifespan characteristics (%) | High-temperature storage characteristics (%) | Output characteristics (W/kg) |
|---|---|---|---|---|---|---|---|---|
| Example 1 (A-1) | 0.2930 | 0.0462 | 8.6 | 77.24 | 87.58 | 90.28 | 92.73 | 4115 |
| Example 2 (A-2) | 0.2920 | 0.0476 | 8.9 | 77.09 | 87.56 | 90.14 | 91.98 | 4009 |
| Example 3 (A-3) | 0.2715 | 0.0478 | 10.5 | 76.99 | 86.20 | 90.01 | 91.61 | 3961 |
| Example 4 (A4) | 0.2720 | 0.0484 | 10.2 | 79.96 | 86.21 | 90.09 | 91.91 | 3974 |
| Example 5 (A-5) | 0.2680 | 0.0487 | 11.0 | 76.69 | 85.21 | 89.82 | 90.98 | 3854 |
| Example 6 (A-6) | 0.2610 | 0.0490 | 11.8 | 72.18 | 83.52 | 87.39 | 73.90 | 3711 |
| Example 7 (A-7) | 0.2615 | 0.0488 | 11.2 | 76.02 | 83.51 | 86.93 | 80.13 | 3726 |
| Example 8 (A-8) | 0.2605 | 0.0496 | 11.6 | 75.38 | 82.96 | 87.22 | 82.34 | 3721 |
| Example 9 (A-1) | 0.2650 | 0.0498 | 11.4 | 74.66 | 83.24 | 86.90 | 84.48 | 3699 |
| Example 10 (A-1) | 0.2665 | 0.0486 | 11.6 | 74.27 | 84.66 | 88.16 | 84.92 | 3801 |
| Comparative Example 1 (A-9) | 0.2650 | 0.0491 | 11.4 | 69.91 | 84.58 | 89.24 | 77.61 | 3798 |
| Comparative Example 2 (A-10) | 0.2590 | 0.0510 | 13.1 | 67.90 | 82.48 | 87.26 | 71.25 | 3699 |
| Comparative Example 3 (A-11) | 0.2645 | 0.0499 | 12.0 | 69.24 | 82.67 | 86.92 | 79.15 | 3686 |
| Comparative Example 4 (A-12) | 0.2615 | 0.0488 | 12.8 | 68.92 | 83.69 | 86.18 | 76.18 | 3632 |

(continued)

| Division (Type) | Electrode adhesion (N) | Electrode resistance ($m\Omega \cdot cm$) | Electrode expansion rate (%) | Initial efficiency (%) | Lifespan characteristics (%) | High-temperature lifespan characteristics (%) | High-temperature storage characteristics (%) | Output characteristics (W/kg) |
|---|---|---|---|---|---|---|---|---|
| Comparative Example 5 (A-13) | 0.2690 | 0.0502 | 12.1 | 70.11 | 81.89 | 85.97 | 77.22 | 3537 |

Referring to Tables 1 and 2 above, in the case of the examples, the anodes had high adhesion and low resistance, and the volume expansion rates were low even during charging and discharging. In addition, the lithium secondary batteries had high initial efficiency and output characteristics, and the lifespan characteristics at room temperature and high temperature were improved compared to the comparative examples.

However, in the case of the comparative examples, the anodes had low adhesion and high expansion rate, as well as high resistance. In addition, the lifespan characteristics, output characteristics, and initial efficiency of the lithium secondary batteries were decreased compared to the examples.

**Claims**

1. An anode active material comprising:

   silicon oxide particles having a crystallinity of 3.0 to 4.5 represented by Equation 1 below, and
   a crystallite size of a (111) plane of the silicon oxide particles is equal to or greater than a crystallite size of a (220) plane thereof, which are obtained through X-ray diffraction (XRD) analysis:

$$[\text{Equation 1}]$$

$$\text{Crystallinity} = I_C/I_A$$

   (in Equation 1, $I_C$ is a peak intensity in a wavelength region of 500 $nm^{-1}$ to 530 $nm^{-1}$ in a Raman spectrum of the silicon oxide particles, and $I_A$ is a peak intensity in a wavelength region of 450 $nm^{-1}$ to 490 $nm^{-1}$ in the Raman spectrum).

2. The anode active material according to claim 1, wherein the crystallite size of the silicon oxide particles is 4.0 nm to 6.0 nm.

3. The anode active material according to claims 1 or 2, wherein $E_2$ defined by Equation 2 below is 0.90 to 1.00:

$$[\text{Equation 2}]$$

$$E_2 = S_{220}/S_{111}$$

   (in Equation 2, $S_{220}$ is a crystallite size of the (220) plane of the silicon oxide particles obtained through the XRD analysis, and $S_{111}$ is a crystallite size of the (111) plane of the silicon oxide particles obtained through the XRD analysis).

4. The anode active material according to one of claims 1 to 3, wherein the $E_2$ is 0.90 to 0.95.

5. The anode active material according to one of claims 1 to 4, further comprising a carbon coating which covers at least a portion of a surface of the silicon oxide particles.

6. The anode active material according to claim 5, wherein $E_3$ defined by Equation 3 below is 0.30 to 1.00:

$$[\text{Equation 3}]$$

$$E_3 = \text{BET}/C_W$$

(in Equation 3, BET is a numerical value of a specific surface area ($m^2$/g) of the silicon oxide particles, and $C_W$ is a numerical value of a content (% by weight) of the carbon coating based on a total weight of the silicon oxide particles and the carbon coating).

7. The anode active material according to claim 6, wherein the $E_3$ is 0.40 to 0.60.

8. The anode active material according to one of claims 5 to 7, wherein a content of the carbon coating is 1% by weight to 10% by weight based on the total weight of the silicon oxide particles and the carbon coating.

9. The anode active material according to one of claims 1 to 8, wherein $E_4$ defined by Equation 4 below is 20 to 30:

$$[\text{Equation 4}]$$

$$E_4 = |\delta|/1000$$

$E_4 = |\delta|/1000$ (in Equation 4, $\delta$ is a slope (peak intensity/eV) of a silicon oxide (SiOx, 0<x<2)-derived peak in an XPS spectrum of the silicon oxide particle surface measured through X-ray photoelectron spectroscopy (XPS)).

10. The anode active material according to claim 9, wherein the silicon oxide-derived peak is a maximum peak at a binding energy of 534±5 eV in the XPS spectrum.

11. The anode active material according to one of claims 1 to 10, wherein the silicon oxide particles have an average particle diameter of 3 $\mu$m to 9 $\mu$m.

12. The anode active material according to one of claims 1 to 11, further comprising a carbon-based active material.

13. The anode active material according to claim 12, wherein the carbon-based active material comprises artificial graphite, natural graphite, or a mixture thereof.

14. The anode active material according to one of claims 1 to 13, wherein a content of the silicon oxide particles is greater than 0% by weight and equal to or less than 10% by weight based on a total weight of the anode active material.

15. A lithium secondary battery comprising:

an anode which comprises the anode active material according to one of claims 1 to 14; and
a cathode disposed to face the anode.

[FIG. 1]

[FIG. 2]

**EP 4 614 600 A1**

EUROPEAN SEARCH REPORT

Application Number

EP 25 15 8969

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 913 872 A1 (HITACHI CHEMICAL CO LTD [JP]) 2 September 2015 (2015-09-02)<br>* claims 1-6 *<br>* paragraphs [0048] - [0062] *<br>----- | 1-15 | INV.<br>H01M4/36<br>H01M4/485<br>H01M4/583<br>H01M10/0525 |
| X | EP 3 057 157 A1 (SHINETSU CHEMICAL CO [JP]) 17 August 2016 (2016-08-17)<br>* claims 1-22 *<br>* paragraphs [0110] - [0119], [0152] *<br>----- | 1-15 | H01M4/587<br><br>ADD.<br>H01M4/02 |
| X | US 2015/303468 A1 (KAMO HIROMICHI [JP] ET AL) 22 October 2015 (2015-10-22)<br>* claims 1-20 *<br>* paragraphs [0128] - [0141], [0144] - [0149] *<br>----- | 1-15 | |
| X | EP 4 210 126 A1 (SK ON CO LTD [KR]) 12 July 2023 (2023-07-12)<br>* claims 1-12 *<br>* paragraphs [0086], [0087], [0090] *<br>* tables 1,2 *<br>----- | 1-15 | |

TECHNICAL FIELDS SEARCHED (IPC)

H01M

The present search report has been drawn up for all claims

| Place of search | Date of completion of the search | Examiner |
|---|---|---|
| Munich | 16 July 2025 | Haering, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                      EP 25 15 8969

This annex lists the patent family members relating to the patent documents cited in  the above-mentioned European search report.
The members are as contained in the European Patent Office EDP file on
The European Patent Office is in no way liable for these particulars which are merely given for the purpose of information.

16-07-2025

| Patent document cited in search report | | Publication date | Patent family member(s) | | Publication date |
|---|---|---|---|---|---|
| EP 2913872 | A1 | 02-09-2015 | CA | 2889306 A1 | 01-05-2014 |
| | | | CN | 104737336 A | 24-06-2015 |
| | | | CN | 110635123 A | 31-12-2019 |
| | | | CN | 110635124 A | 31-12-2019 |
| | | | EP | 2913872 A1 | 02-09-2015 |
| | | | JP | 6380106 B2 | 29-08-2018 |
| | | | JP | 6683213 B2 | 15-04-2020 |
| | | | JP | 2018160460 A | 11-10-2018 |
| | | | JP | 2020113547 A | 27-07-2020 |
| | | | JP | WO2014065418 A1 | 08-09-2016 |
| | | | KR | 20150079603 A | 08-07-2015 |
| | | | KR | 20200129176 A | 17-11-2020 |
| | | | TW | 201424098 A | 16-06-2014 |
| | | | US | 2015270540 A1 | 24-09-2015 |
| | | | WO | 2014065418 A1 | 01-05-2014 |
| EP 3057157 | A1 | 17-08-2016 | CN | 105895892 A | 24-08-2016 |
| | | | EP | 3057157 A1 | 17-08-2016 |
| | | | JP | 2016152077 A | 22-08-2016 |
| | | | KR | 20160100830 A | 24-08-2016 |
| | | | TW | 201703319 A | 16-01-2017 |
| | | | US | 2016240843 A1 | 18-08-2016 |
| US 2015303468 | A1 | 22-10-2015 | CN | 105024058 A | 04-11-2015 |
| | | | JP | 6196183 B2 | 13-09-2017 |
| | | | JP | 2015207474 A | 19-11-2015 |
| | | | KR | 20150122072 A | 30-10-2015 |
| | | | US | 2015303468 A1 | 22-10-2015 |
| EP 4210126 | A1 | 12-07-2023 | EP | 4210126 A1 | 12-07-2023 |
| | | | KR | 20240012595 A | 29-01-2024 |
| | | | US | 2023395792 A1 | 07-12-2023 |

EPO FORM P0459

For more details about this annex : see Official Journal of the European Patent Office, No. 12/82